# EUROPEAN PATENT APPLICATION

(11) **EP 4 495 811 A1**
(43) Date of publication of application: **22.01.2025**
(21) Application number: 23770323.6
(22) Date of filing: 24.02.2023
(51) Int. Cl.: G06F 21/36

(54) **INFORMATION PROCESSING DEVICE, PROGRAM, AND INFORMATION PROCESSING METHOD**

(30) Priority: 18.03.2022 JP 2022044275
(71) Applicant: Sony Group Corporation, Tokyo 108-0075 (JP)
(72) Inventor: HIRANO, Yuki, Tokyo 108-0075 (JP); KAMOHARA, Tadashi, Tokyo 108-0075 (JP); FUKUOKA, Yuichi, Tokyo 108-0075 (JP)
(74) Representative: 2SPL Patentanwälte PartG mbB
(86) International application number: PCT/JP2023/006732
(87) International publication number: WO 2023/176364

(57) **Abstract**

An information processing apparatus includes: a display control unit that performs control to display, on a display unit, an authentication image having a change area in which a partial area in an original image has been changed; and an authentication processing unit that performs authentication processing on the basis of a range of the change area and a range of a selection area selected on the authentication image displayed on the display unit.

## Description

### TECHNICAL FIELD

The present technology relates to a technical field of an information processing apparatus, a program, and an information processing method that perform authentication based on a unique memory of a user.

### BACKGROUND ART

In user authentication, an identification (ID) method and a password method are often used, but in this method, a problem that the user forgets an ID and a password and cannot perform authentication tends to occur.

In order to solve this problem, Patent Document 1 below discloses a technique in which a user is considered to be able to specify an image in a case where the user selects an image related to the memory of the user.

### CITATION LIST

### PATENT DOCUMENT

Patent Document 1: Japanese Patent Application Laid-Open No. 2015-072592

### SUMMARY OF THE INVENTION

### PROBLEMS TO BE SOLVED BY THE INVENTION

However, in a method in which an image list is presented by mixing an image related to the memory of the person and other dummy images, and an image related to the memory of the person is selected from the image list, a correct image is patterned or a dummy image is patterned, and there arises a problem that the correct image is known as trials are repeated.

The present technology has been made in view of such a problem, and an object thereof is to perform appropriate authentication processing while preventing patterning of an image used for authentication.

### SOLUTIONS TO PROBLEMS

An information processing apparatus according to the present technology includes: a display control unit that performs control to display, on a display unit, an authentication image having a change area in which a partial area in an original image has been changed; and an authentication processing unit that performs authentication processing on the basis of a range of the change area and a range of a selection area selected on the authentication image displayed on the display unit.

It is possible to generate a plurality of types of authentication images from one original image according to variations of some areas to be changed.

A program according to the present technology causes an arithmetic processing apparatus to execute: a display control function of performing display control of an authentication image having a change area in which a partial area in an original image has been changed; and an authentication processing function that performs an authentication processing on the basis of a range of the change area and a range of a selection area selected on the authentication image displayed by the display control function.

In an information processing method according to the present technology, an arithmetic processing apparatus executes: processing of performing display control of an authentication image having a change area in which a partial area in an original image has been changed; authentication processing based on a range of the change area and a range of a selection area selected on the authentication image displayed.

The above-described functions and effects can also be obtained by such a program or information processing method.

### BRIEF DESCRIPTION OF DRAWINGS

Fig. 1 is a block diagram of an information processing apparatus according to the present technology.
Fig. 2 is a functional block diagram of an information processing apparatus.
Fig. 3 is a diagram illustrating an example of an original image.
Fig. 4 is a diagram illustrating an example of an authentication image in which a part of an original image is changed.
Fig. 5 is a diagram for explaining an example of generating an authentication image using a server apparatus.
Fig. 6 is a diagram illustrating an example of a change area and a selection area determined to be pass by the unit pass/fail determination unit.
Fig. 7 is a diagram illustrating an example of a change area and a selection area determined to be failed by the unit pass/fail determination unit.
Fig. 8 is a diagram illustrating another example of a change area and a selection area determined to be failed by the unit pass/fail determination unit.
Fig. 9 is a diagram illustrating still another example of a change area and a selection area determined to be failed by the unit pass/fail determination unit.
Fig. 10 is a diagram illustrating an example of a setting screen.
Fig. 11 is a diagram illustrating an example of an error screen.
Fig. 12 is a flowchart illustrating an example of authentication processing.
Fig. 13 is a diagram illustrating an example of a detailed settings screen.
Fig. 14 is a diagram illustrating an example of a cooperation setting screen.

### MODE FOR CARRYING OUT THE INVENTION

Hereinafter, embodiments according to the present technology will be described in the following order with reference to the accompanying drawings.
<1. Configuration of Information Processing Apparatus>
<2. Functional Configuration of Information Processing Apparatus>
<3. Processing Flow>
<4. Modifications>
<5. Summary>
<6. Present Technology>

### <1. Configuration of Information Processing Apparatus>

An example of an information processing apparatus 1 according to the present embodiment is a smartphone as a mobile terminal apparatus. In addition, as an example of authentication in the information processing apparatus 1, authentication for releasing the lock screen of the smartphone and enabling normal operation of the smartphone will be described as an example.

However, the application of the information processing apparatus 1 is not limited thereto, and can be applied to various arithmetic processing apparatuses including an arithmetic processing unit and a storage unit. For example, various devices such as a camera, a personal computer, a personal digital assistant (PDA), and a tablet terminal can be considered.

In addition, the following authentication modes can also be applied to various scenes. For example, the scenes include authentication for starting use of an application in a terminal or the like.

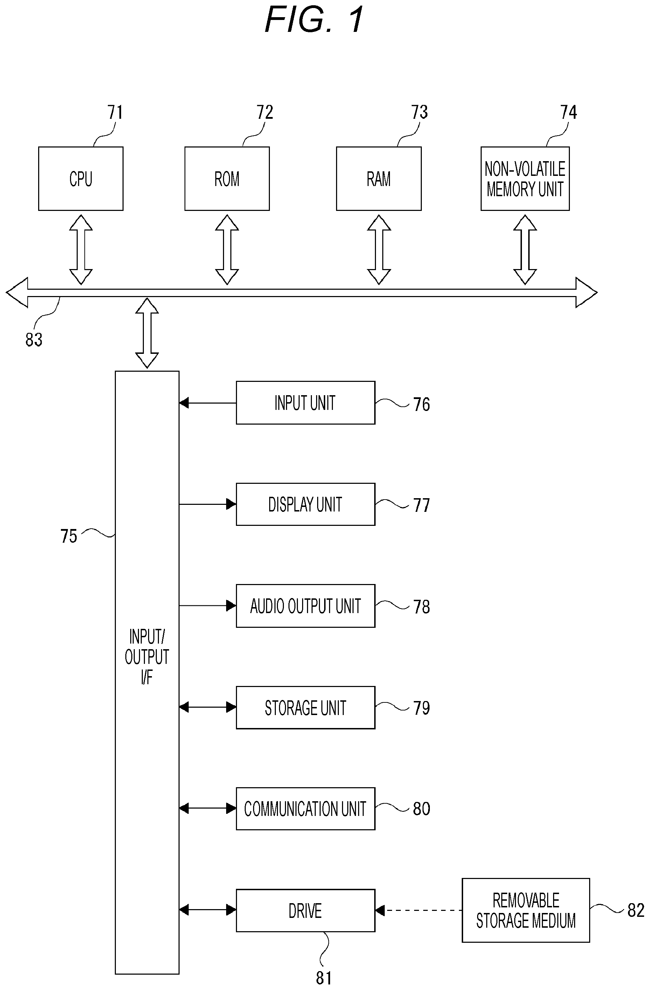

A configuration of the information processing apparatus 1 will be described with reference to Fig. 1.

As illustrated, the information processing apparatus 1 has the following configuration as a computer apparatus. Note that the information processing apparatus 1 does not need to include all the configurations described below, and may include only a part thereof.

The information processing apparatus 1 includes a central processing unit (CPU) 71 as an arithmetic processing unit. As illustrated in Fig. 1, the CPU71 executes various processes according to a program stored in a non-volatile memory unit 74 such as a read only memory (ROM) 72 or an electrically erasable programmable read-only memory (EEP-ROM), or a program loaded from a storage unit 79 to a random access memory (RAM) 73. In addition, the RAM 73 appropriately stores data and the like necessary for the CPU 71 to execute various processes.

The CPU 71, the ROM 72, the RAM 73, and the non-volatile memory unit 74 are connected to each other via a bus 83. An input/output interface 75 is also connected to the bus 83.

The CPU71 realizes various functions for authentication described later by executing various processes according to these programs.

An input unit 76 including an operation element or an operation device is connected to the input/output interface 75.

As the input unit 76, for example, one of various operation elements and operation devices including a keyboard, a mouse, a key, a dial, a touch panel, a touch pad, a remote controller, and the like is assumed.

The input unit 76 detects a user operation, and the CPU 71 interprets a signal corresponding to the input operation.

In addition, a display unit 77 including a liquid cristal display (LCD), an organic EL panel, or the like, and an audio output unit 78 including a speaker or the like are integrally or separately connected to the input/output interface 75.

The display unit 77 is a display unit that performs various displays, and includes a display device or the like integrally attached to a computer apparatus. Note that the display unit 77 may by constituted by a separate display device or the like connected to the computer apparatus.

The display unit 77 executes display of an image for various types of image processing, a moving image to be processed and the like on a display screen on the basis of an instruction of the CPU 71. In addition, the display unit 77 displays various operation menus, icons, messages, and the like, that is, graphical user interfaces (GUIs), on the basis of an instruction from the CPU 71.

There is a case where the storage unit 79 including a hard disk, a solid-state memory, or the like, and a communication unit 80 including a modem or the like are connected to the input/output interface 75.

The communication unit 80 performs communication processing via a transmission path such as the Internet, and performs wired/wireless communication with various devices and communication based on bus communication or the like.

A drive 81 is also connected to the input/output interface 75 as needed, and a removable storage medium 82 such as a magnetic disk, an optical disc, a magnetooptical disk, or a semiconductor memory is mounted.

A data file such as an image file, various computer programs, and the like can be read from the removable storage medium 82 by the drive 81. The read data file is stored in the storage unit 79, and images and sounds included in the data file are output by the display unit 77 and the audio output unit 78. Furthermore, a computer program and the like read from the removable storage medium 82 is installed in the storage unit 79 as needed.

In such a computer apparatus, for example, software for the processing of the present embodiment can be installed via network communication by the communication unit 80 or the removable storage medium 82. Alternatively, the software may be stored in advance in the ROM 72, the storage unit 79, or the like.

The CPU 71 performs processing operation on the basis of various programs, so that necessary communication processing is executed in the information processing apparatus 1.

Note that the computer apparatus constituting the information processing apparatus 1 is not limited to the single information processing apparatus as illustrated in Fig. 1, and may be configured by systematizing a plurality of information processing apparatuses. The plurality of information processing apparatuses may be systematized by a LAN or the like, or may be arranged in a remote place by a VPN or the like using the Internet or the like. The plurality of information processing apparatuses may include an information processing apparatus as a server group (cloud) usable by a cloud computing service.

### <2. Functional Configuration of Information Processing Apparatus>

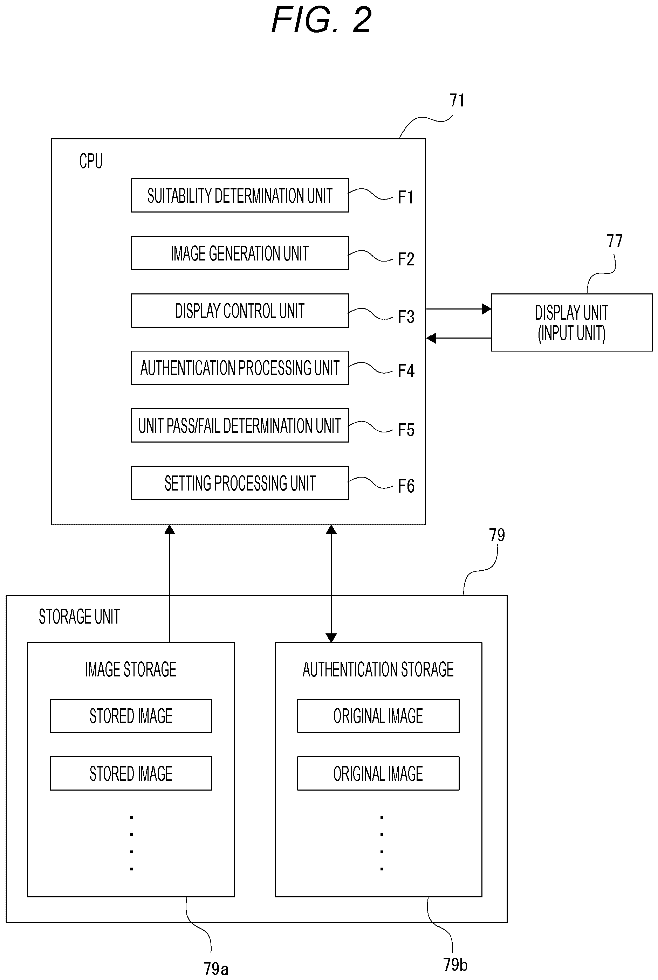

In order to more specifically describe various processes executed by the information processing apparatus 1 for the authentication processing, a part of each unit illustrated in Fig. 1 is extracted and illustrated in Fig. 2.

As illustrated in Fig. 2, the CPU71 has functions as a suitability determination unit F1, an image generation unit F2, a display control unit F3, an authentication processing unit F4, a unit pass/fail determination unit F5, and a setting processing unit F6.

In addition, the storage unit 79 is provided with an image storage 79a and an authentication storage 79b. Note that the image storage 79a and the authentication storage 79b are merely classifications in a case where the image storage 79a and the authentication storage 79b are separated for convenience, and the storage unit 79 as the image storage 79a and the storage unit 79 as the authentication storage 79b do not need to exist in a physically separated manner.

The image storage 79a is an area in which a captured image or the like captured by a smartphone as the information processing apparatus 1 is stored. Note that, in addition to the captured image captured by the information processing apparatus 1, an image captured by another camera apparatus or the like, an image downloaded via a network, or the like may be stored in the image storage 79a.

The authentication storage 79b is an area in which an image (hereinafter, described as "original image") selected from the images (hereinafter, described as "stored image") stored in the image storage 79a and used for authentication is stored.

Here, selection of the original image from the stored image will be described.

The suitability determination unit F1 of the CPU71 determines whether or not each stored image can be used as the original image, and performs processing of duplicating the stored image and storing the same in the authentication storage 79b as the original image in a case where it is determined that the stored image can be used as the original image. That is, the authentication storage 79b can be said to be an area in which a captured image that can be used as an original image is stored.

The determination as to whether or not the original image can be used is made on the basis of how to use the original image for authentication.

Specifically, the image generation unit F2 of the CPU71 generates the authentication image from the original image using the deep fake technology.

The authentication image is an image obtained by changing a part of the image so that an unnatural point does not appear using a learning model obtained by machine learning.

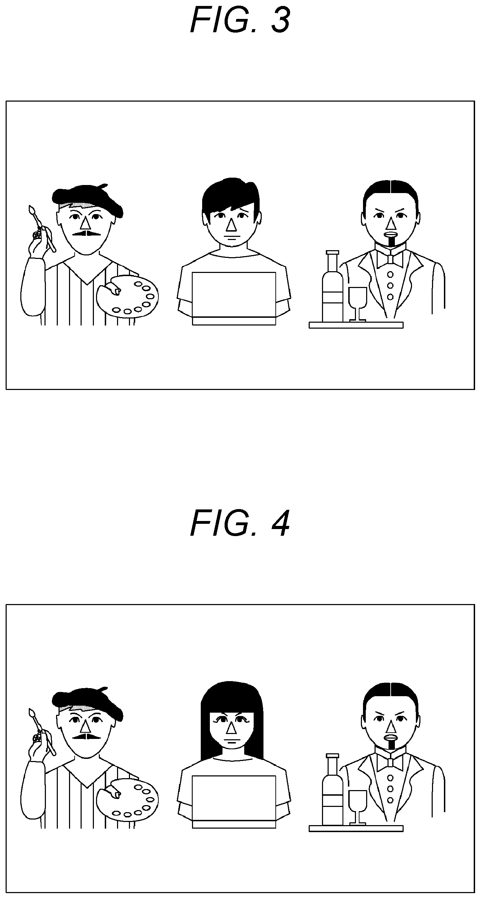

For example, the length of the hair of the person positioned at the center is changed from the short hair to the long hair with respect to the original image illustrated in Fig. 3, thereby generating an authentication image used for authentication (see Fig. 4) .

Specifically, as will be described later, the authentication image is an image presented to the user. The user who is presented with the authentication image selects (designates) the changed portion (area). In a case where the selection area is appropriate, it is determined that the authentication has succeeded, and in a case where the selection area is inappropriate, it is determined that the authentication has failed.

In addition to the length of the hair, for example, it is conceivable that the change to be made to the original image is to change the attribute of the person, such as wearing (or removing) glasses, changing the hair color, changing the skin color, or changing the gender.

In addition, the authentication image may be generated from the original image by changing the object possessed by the person. Specifically, it is conceivable to change a can containing a beverage held by a person to another object or the like.

The suitability determination unit F1 may calculate the suitability score as the original image for each stored image stored in the image storage 79a using machine learning. Furthermore, in that case, the suitability determination as the original image may be performed by comparing the suitability score with a predetermined threshold value. For example, the suitability determination unit F1 determines that a stored image having a suitability score of 80 points or more is appropriate as the original image.

The suitability score is calculated high, for example, in a case where there are many subjects of living things such as people and animals. In addition, the larger the number of objects held by a person, such as a beverage can, a notebook personal computer (PC), and a paint brush, the higher the suitability score is likely to be calculated.

Furthermore, in the case of an object other than the object held or touched by the person, the presence of the object fixed to the place can be an element that increases the suitability score. For example, it is a playground equipment installed in a park or the like.

This is because an authorized user who possesses the information processing apparatus 1 and a user who has captured the image is highly likely to store what he/she possesses at the time of capturing, and even if the possessed object is changed to generate the authentication image, there is a high possibility that the change portion can be appropriately pointed out.

On the other hand, it is conceivable that the presence of an object that is a movable object such as an automobile in the background and is merely captured by chance at that timing is unlikely to be a factor of increasing the suitability score.

For example, even if the authentication image is generated by changing the vehicle type or the coloring of the automobile captured in the background, the authorized user who possesses the information processing apparatus 1 does not grasp the vehicle type or the coloring of the automobile in the background, and there is a high possibility that the authorized user cannot appropriately point out the change portion.

Furthermore, it is preferable that the suitability score is calculated to be low for a simple landscape image obtained by capturing a mountain, a river, or the like. This is because it is difficult to say that only the authorized user can appropriately point out the authentication image even if the authentication image is generated by performing a change to increase the number of branches of the imaged tree.

It is desirable that the processing of performing the suitability determination on various images such as the captured image stored in the image storage 79a and storing the image passing the determination in the authentication storage 79b be periodically performed several times a day.

By periodically updating the original image stored in the authentication storage 79b, patterning of the authentication image generated from the original image can be prevented, and appropriate authentication processing can be performed.

In addition, the image deleted from the image storage 79a is desirably deleted from the authentication storage 79b even if the image passes the suitability determination. The image deleted from the image storage 79a may include an image that the user does not like, an image that the user does not want to see again, or the like. Even though a part of the area is changed, it is not preferable that such an image is repeatedly seen as the authentication image by the user. Therefore, it is preferable to execute processing of deleting the image deleted from the image storage 79a at the update timing of the authentication storage 79b.

In addition, in this regard, the image generation unit F2 desirably generates an authentication image from the original image each time the authentication processing is executed. As a result, it is possible to reduce the possibility that the image deleted by the user is presented to the user as the authentication image. In addition, thus, it is not necessary to generate and prepare the authentication image from the original image in advance. Therefore, it is possible to eliminate the possibility that the authentication image is leaked to the outside and becomes a remote cause of the authentication success of an unauthorized user.

Note that, even if the configuration in which the authentication image is prepared in advance is adopted, it is possible to obtain the above-described or other effects described later.

The image generation unit F2 may use an apparatus different from the information processing apparatus 1, for example, a server apparatus or the like when generating the authentication image from the original image.

For example, the authentication image generated by the server apparatus may be acquired by transmitting the image as the original image to the server apparatus that generates the image using the deep fake.

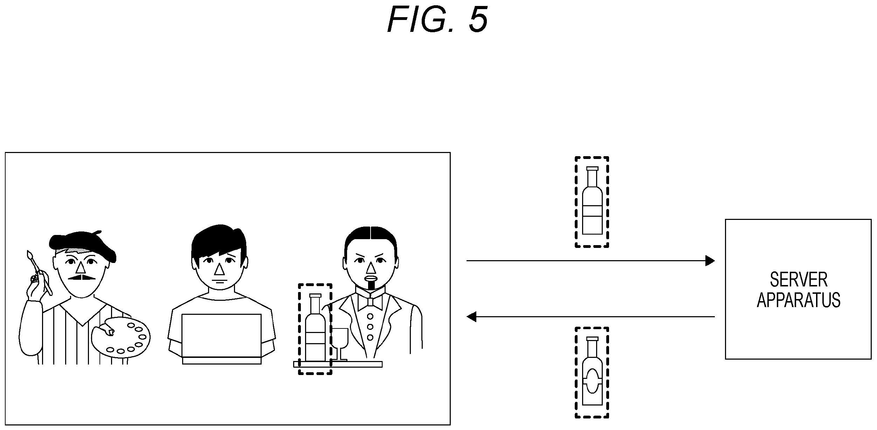

In addition, in a case where the original image is transmitted to the server apparatus, only a part of the original image may be transmitted to the server apparatus from the viewpoint of privacy protection. This will be specifically described with reference to Fig. 5.

An area in which an image of a subject selected from the viewpoint of privacy protection is captured among various subjects illustrated in the stored image, that is, an area in which an image of a bottle of wine is captured in the example of Fig. 5 is cut out and transmitted to the server apparatus.

In the server apparatus, an image or the like having the same size as the image of the wine bottle and having a changed label of the wine bottle is generated and sent back to the information processing apparatus 1.

The image generation unit F2 generates an authentication image by applying the received image to the clipped area.

As a result, information on other subjects does not flow out of the information processing apparatus 1, and privacy can be protected.

Fig. 2 will be described again.

The display control unit F3 performs processing of displaying the authentication image generated by the image generation unit F2 on the display unit 77.

The authentication processing unit F4 performs authentication processing using the authentication image. The authentication processing is realized by performing unit authentication determination using one authentication image a plurality of times. Specifically, the authentication processing unit F4 determines that the authentication of the user is successful in a case where the unit authentication determination is passed m times in a row. In addition, in a case where the user fails the unit authentication determination n times, it is determined that the authentication for the user has failed.

The unit authentication determination is performed by the unit pass/fail determination unit F5. The unit pass/fail determination unit F5 compares the range of the area (change area Ar1) changed from the original image in the authentication image with the range of the area (selection area Ar2) selected by the user, and performs the pass/fail determination on the authentication image. Note that, the comparison of the ranges of the areas means comparison of the positions, sizes, shapes, or the like of the areas.

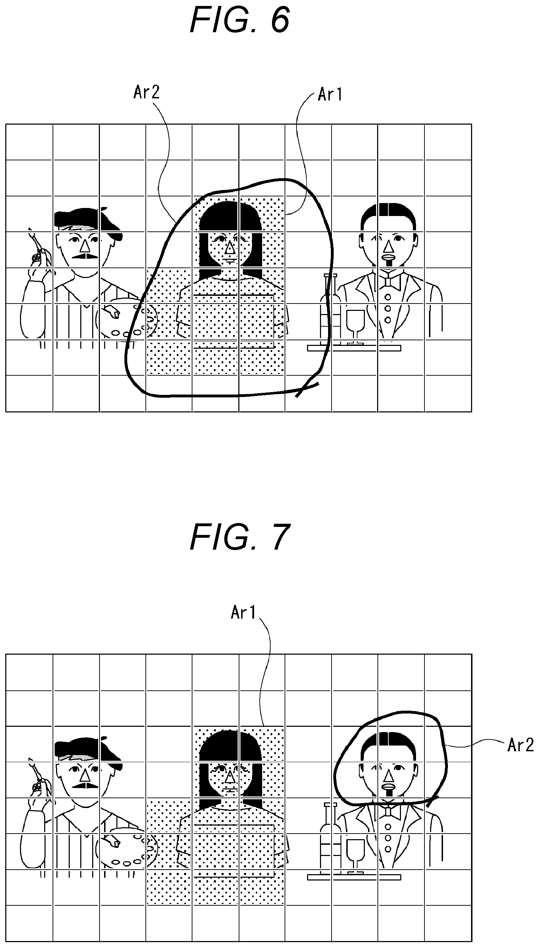

Fig. 6 illustrates an example of the relationship between the change area Ar1 and the selection area Ar2 in a case where the unit pass/fail determination unit F5 determines pass.

As illustrated, the selection area Ar2 is an area including most of the change area Ar1, and an area other than the change area Ar1 is made small. As described above, in a case where the selection area Ar2 includes an area of a predetermined ratio (for example, 80%) or more in the change area Ar1 and an area other than the change area Ar1 is an area set to be less than the predetermined ratio (for example, 40%), it is determined as pass in the unit pass/fail determination.

Some examples of the selection area Ar2 determined to be failed in the unit pass/fail determination are illustrated.

Fig. 7 illustrates a case where the selection area Ar2 does not include the change area Ar1 at all. This is a case that can occur in a case where the user cannot correctly recognize the changed portion.

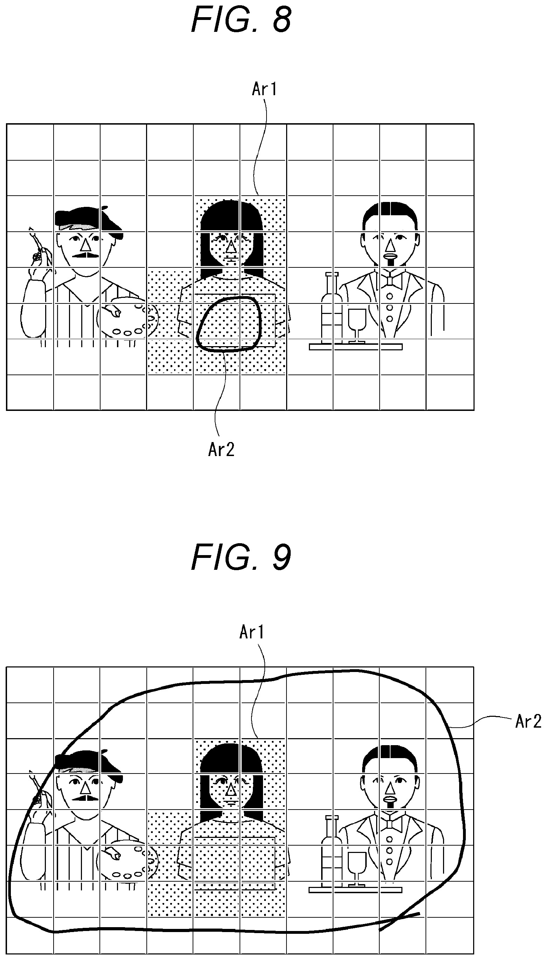

Fig. 8 illustrates a case where the selection area Ar2 includes only a part of the change area Ar1, and the area is small. This is a case that can occur in a case where the selection area Ar2 is randomly designated or the like.

Fig. 9 illustrates a case where the selection area Ar2 includes the entire change area Ar1 but includes too many areas other than the change area Ar1. This is a case where the change portion is unknown and the selection area Ar2 is designated so as to surround the entire image or the like.

Fig. 2 will be described again.

The setting processing unit F6 performs setting processing for enabling the user to select whether or not to execute the authentication processing using the authentication image described above.

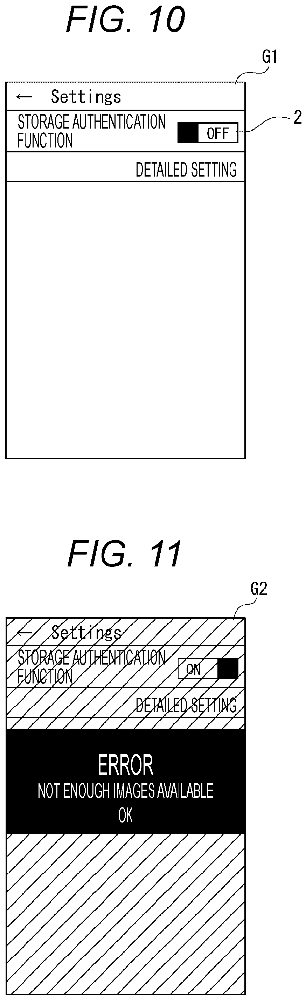

Fig. 10 illustrates an example of a setting screen G1 presented by the setting processing unit F6. As illustrated in the drawing, a text label "storage authentication function" and a toggle button 2 that can be switched between ON and OFF are arranged.

The CPU71 of the information processing apparatus 1 selectively executes the above-described authentication processing on the basis of the setting selected by the user operation, or executes authentication by an existing ID and password method or the like.

Note that, even in a case where the user selects to execute the authentication processing using the above-described authentication image, the user may be configured not to be permitted depending on conditions.

For example, in a case where the number of stored images stored in the image storage 79a is smaller than a predetermined number, in a case where the number of images determined to be utilizable as the original image by the suitability determination unit F1 in the stored images is smaller than a predetermined number, or the like, the authentication processing using the above-described authentication image is not permitted.

At this time, the setting processing unit F6 may display an error screen G2 (or an error dialog) as illustrated in Fig. 11.

As a result, it is possible to avoid a state in which the number of original images is small and the authentication image is patterned, that is, a state in which appropriate authentication processing cannot be performed.

### <3. Processing Flow>

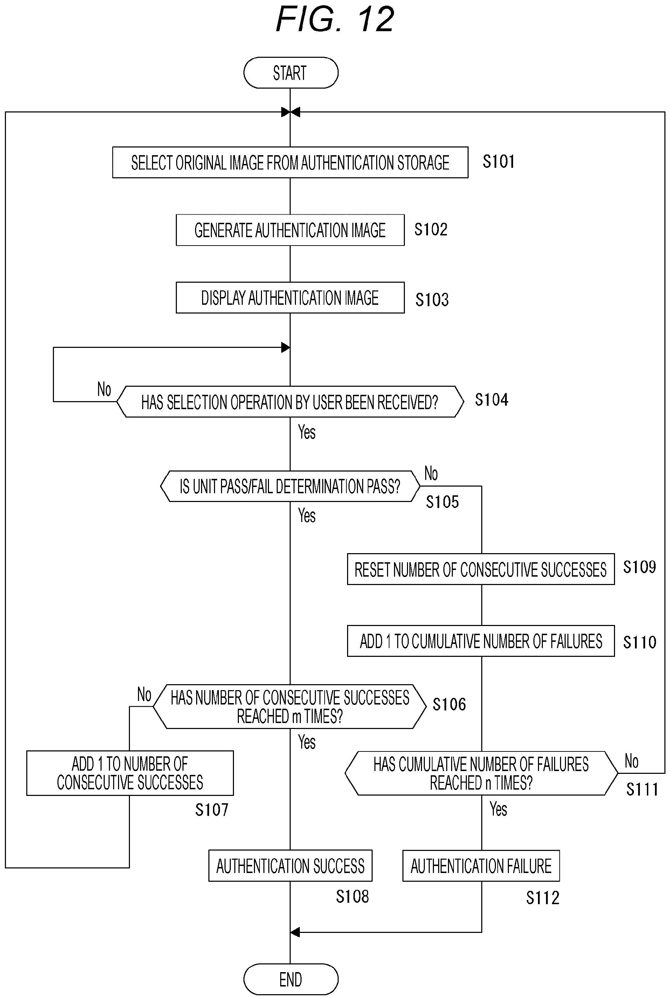

A process executed by the CPU71 of the information processing apparatus 1 to implement the authentication processing using the authentication image described above will be described with reference to Fig. 12.

When the authentication processing needs to be performed, the CPU71 first performs a process of selecting an original image from the authentication storage 79b in step S101. The case where the authentication processing is required is, for example, a case where the user performs a swipe operation, a tap operation, an operation of pressing a button, or the like for releasing the lock screen of the smartphone.

Next, in step S102, the CPU71 performs processing of generating an authentication image from the original image. This processing may use an external server apparatus as described above.

In step S103, the CPU71 performs processing of displaying the authentication image on the display unit 77.

In step S104, the CPU71 determines whether or not a selection operation by the user has been received. The CPU71 waits in the processing of step S104 until receiving the selection operation. Note that the selection operation is an operation in which the user surrounds a predetermined area as described with reference to Fig. 6 and the like.

In a case where it is determined that the selection operation of the user has been received, the CPU71 branches on the basis of whether or not the unit pass/fail determination is pass in step S105.

In a case where the unit pass/fail determination is pass, the CPU71 determines in step S106 whether or not the number of consecutive successes (passes) has reached m times.

In a case where it is determined that the number of consecutive successes has not reached m times, the CPU71 adds 1 to the number of consecutive successes in step S107, returns to the processing of step S101, and selects the original image and generates the authentication image again.

On the other hand, in a case where it is determined that the number of consecutive successes has reached m times, the CPU71 determines that the authentication has succeeded in step S108. As a result, the user can unlock the smartphone as the information processing apparatus 1.

In a case where the unit pass determination is fail in step S105, the CPU71 resets the number of consecutive successes in step S109, and adds 1 to the cumulative number of failures in step S110.

Subsequently, in step S111, the CPU71 determines whether or not the cumulative number of failures has reached n times. In a case where it is determined that the cumulative number of failures has reached n times, the CPU71 determines the authentication failure in step S112. In this case, for example, it is conceivable that the unlock operation is not received for a certain period of time.

On the other hand, in a case where it is determined in step Sill that the cumulative number of failures has not reached n times, the CPU71 returns to the processing of step S101 and selects the original image and generates the authentication image again.

Note that "m" as a threshold value to be compared with the number of consecutive successes described herein is desirably changed as appropriate.

For example, in a case where the screen of the information processing apparatus 1 is locked again after it is determined in step S108 that the authentication has succeeded, the threshold value m may be set to a smaller value as the elapsed time from the determination that the authentication has succeeded is shorter.

For example, in a case where only about one minute has passed since the last successful authentication, there is a high possibility that the authorized user tries to unlock the terminal. In such a case, the user's convenience can be improved by decreasing the threshold value m.

In addition, the value of the threshold value m may be made smaller as the number of stored images determined to be usable as the original image by the suitability determination unit F1 is larger, that is, as the number of authentication images that can be generated is larger.

As the number of stored images available as the original image increases, the possibility that the same authentication image is used for authentication many times decreases, and patterning is difficult. Therefore, by reducing the threshold value m, it is possible to improve convenience while securing a certain degree of security.

In addition, as the suitability score of the original image is higher, there is a high possibility that a high-quality authentication image in which only the authorized user can derive a correct answer can be generated. Therefore, the value of the threshold value m may be made smaller as the suitability score of the original image is higher.

### <4. Modifications>

The threshold value m corresponding to the above-described number of consecutive successes and the threshold value n corresponding to the cumulative number of failures may be manually set by the user.

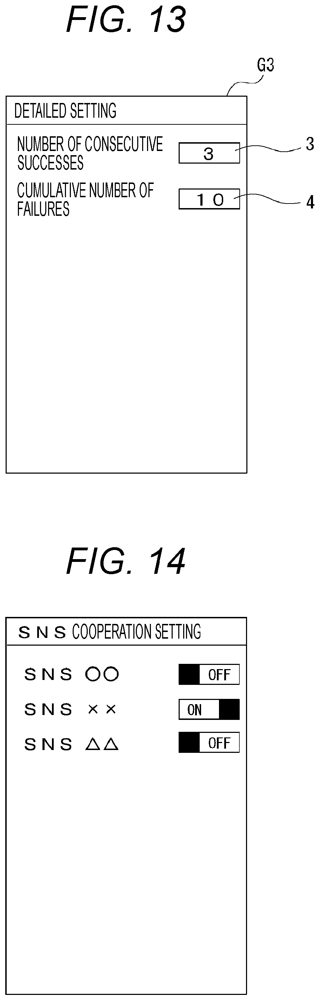

For example, as illustrated in Fig. 13, a detailed setting screen G3 on which an input field 3 in which a threshold value m ("3" times in the drawing) corresponding to the number of consecutive failures can be set and an input field 4 in which a threshold value n ("10" times in the drawing) corresponding to the cumulative number of failures (number of retries) can be set are arranged may be presented to the user.

In the above-described example, it has been described that the suitability score is high for a stored image or the like having many subjects of living things such as people and animals. However, even in a case where the suitability score is high, there is a stored image that is not appropriate as the original image.

For example, there is a case where the stored image is an image posted on a social networking service (SNS) or the like, and even if the stored image is adopted as the original image, there is a possibility that a third party knows the changed portion.

Therefore, the suitability determination unit F1 may determine that the stored image posted on the SNS is not suitable for the original image regardless of the suitability score.

As a result, the possibility that only the authorized user can correctly answer the change area Ar1 in the authentication image can be increased, and the security can be improved.

Whether or not the stored image is suitable for the original image may be determined by monitoring the posting of the image to all the SNSs installed in the information processing apparatus 1, but the SNS to be monitored may be selectable by the user.

For example, ON and OFF may be switchable as to whether or not to monitor image posting for each SNS, that is, whether or not to cooperate. On a cooperation setting screen G4 illustrated in Fig. 14, a toggle button 5 for switching ON and OFF of cooperation is arranged for each SNS.

Note that the suitability determination unit F1 may determine that an image similar to the image posted on the SNS is not suitable for the original image regardless of the suitability score.

The image similar to the image posted on the SNS is, for example, a series of images captured using the continuous shooting function together with the posted image or the like. Such an image can be specified by, for example, image recognition processing or a time stamp of the image.

Note that, instead of monitoring the image posted on the SNS, the user may select whether or not the image is an image posted on the SNS or the like. For example, at the time of presenting the authentication image, by presenting a button or the like that allows the user to display an intention that the stored image that is the source of the authentication image is inappropriate as the original image, the suitability of the original image may be selected by the user's own operation.

In the above-described example, an example has been described in which the user specifies the selection area Ar2 by surrounding an arbitrary range, but the selection area Ar2 may be selected from a small area by a tap operation or the like after the authentication image is divided into the small areas.

The authentication method described above can be applied to authentication at the time of activation of a specific application or the like in addition to the release of the screen lock of the smartphone. For example, for a specific application that is not desired to be activated by a user other than the authorized user (smartphone owner user), the authentication method is introduced at the time of activation. As a result, for example, in a case where the smartphone is lent out to another person or the like, another person cannot activate the application, which is preferable.

In the above-described example, an example has been described in which the stored image and the original image are separately stored by providing the image storage 79a and the authentication storage 79b in the storage unit 79. However, other methods may be adopted, and for example, a configuration may be adopted in which the original image is not separately stored by adding flag information to the stored image determined to be appropriately usable as the original image among the stored images. As a result, the storage area of the storage unit 79 can be effectively used.

Note that another example of preparing an authentication image using deep fake is conceivable.

For example, a configuration is also conceivable in which both a correct image captured by the user and a false image in which a part of the correct image is changed by a deep fake technology are presented to the user, and the user is caused to select the correct image.

Furthermore, at that time, the false image to be presented together with the correct image A may be a false image in which a part of the correct image B is changed. If the correct image A and the false image in which a part of the correct image A is changed are simultaneously presented to the user, the changed portion is known to the user, and thus, there is a possibility that this may work advantageously for the unauthorized user in the subsequent authentication processing. However, since the correct image that is the source of the false image and the correct image to be presented to the user at the same time as the false image are different images, it is possible to make it difficult for the unauthorized user to estimate the change portion, and it is possible to suitably perform the subsequent authentication processing.

In addition, the authentication processing using the authentication image described above can perform two-stage authentication by combining with other authentication processing, for example, biometric authentication or pattern authentication such as fingerprint authentication, face authentication, iris authentication, or vein authentication. This makes it more difficult to successfully authenticate by the unauthorized user.

In the above-described example, when the suitability determination unit F1 determines whether or not each stored image is usable as the original image, a configuration in which it is easily determined that each stored image is usable as the original image in a case where there are many subjects of living things such as people and animals has been described.

As another example, the suitability determination unit F1 may perform the suitability determination using the information of the capturing date and time of the stored image. For example, there is a high possibility that the hairstyle and the clothes of the subject of the image whose capturing date and time is new are known matters for users other than the authorized user. On the other hand, there is a high possibility that the subject of the image whose capturing date and time is old is a subject that can be known only by the authorized user, and there is a high possibility that only the authorized user can specify the change area Ar1 even if a part of the subject is changed. Therefore, the older the capturing date and time, the higher the suitability score may be.

Furthermore, considering the diffusion of images using the SNS or the like, it is considered that there is a high possibility that a captured image with an older capturing date and time has already been posted on the SNS or the like. On the other hand, a captured image having a new capturing date and time is less likely to be captured. Therefore, the captured image having a new capturing date and time may have a higher suitability score.

### <5. Summary>

As described above, the information processing apparatus 1 such as a smartphone includes the display control unit F3 that performs control to display the authentication image having the change area Ar1 in which a partial area in the original image is changed on the display unit 77, and the authentication processing unit F4 that performs the authentication processing on the basis of the range of the change area Ar1 and the range of the selection area Ar2 selected on the authentication image displayed on the display unit 77.

It is possible to generate a plurality of types of authentication images from one original image according to variations of some areas to be changed.

Therefore, there is a low possibility that the authentication image used for authentication is patterned, and it is possible to prevent the changed area from being easily estimated.

Note that, specifically, the authentication processing unit F4 performs the authentication processing using the comparison result between the range of the change area Ar1 and the range of the selection area Ar2.

As a result, the authentication processing can be performed only by comparing the shape, size, position, and the like of the range. In other words, it is not necessary to perform image processing of comparing subjects in both areas. Therefore, the processing load can be reduced.

As described with reference to Fig. 2 and the like, the storage unit 79 that stores the captured image may be provided, and the original image may be the captured image stored in the storage unit 79.

For example, by using an image captured in a smartphone as the information processing apparatus 1, an image that is not publicly available can be used as an original image. Therefore, since the authentication image is generated on the basis of the image uniquely stored for a long time by the authorized user, it is preferable to perform the authentication processing in which only the authorized user can make a correct answer.

In addition, by using the captured image, the original image used for the authentication image may not be prepared exclusively. As a result, user convenience can be improved.

As described with reference to Fig. 2 and the like, the information processing apparatus 1 may include the image generation unit F2 that generates the authentication image from the original image. In addition, the image generation unit F2 may generate an authentication image for each authentication processing.

That is, every time the authentication is performed, the authentication image is generated using the captured image stored in the storage unit 79 (the authentication storage 79b) as the original image. Therefore, it is not necessary to prepare the original image and the authentication image in advance. Therefore, there is no possibility that the original image and the authentication image are leaked to the outside, leading to successful authentication of the unauthorized user.

As described with reference to Fig. 2 and the like, in the information processing apparatus 1, the generation of the authentication image from the original image may be performed using a deep fake technology.

By using an existing technology called a deep fake technology, an authentication image can be easily generated from an original image.

As described with reference to Figs. 2, 3, 4, and the like, in the information processing apparatus 1, the authentication image may be obtained by changing the attribute of a person or an animal as a subject included in the original image.

In a case where the authentication image is generated from the original image, first, it is conceivable to change the attribute of the plant or the like included in the background or the like. For example, the state of the plant is changed to a withering state or the like by increasing the leaves of the plant, changing the color, or deleting the leaves. However, there are few cases where how much leaves of a certain tree planted in a park that the user has visited before has grown or what the shape of the leaf has been is memorized, and such a change is less noticeable to the user. Therefore, it is not easy for even an authorized user to specify the change portion. That is, it cannot be said that the authentication image obtained in this manner is appropriate.

On the other hand, it is conceivable to change the attribute of an animal such as a person or a pet included in the image. Such a person is likely to be a friend of the authorized user, and such an animal is likely to be a pet raised by the authorized user. For example, the authentication image is generated by causing a person to wear glasses, changing a hair color, changing a skin color, or changing long hair to short hair. Since these changes change the appearance of the acquaintance or the appearance of the pet uniquely memorized by the authorized user, it is easy for the authorized user to guide the correct answer. Then, for the unauthorized user, the person or the animal whose attribute has been changed becomes an image without a sense of discomfort as long as there is no trace of the change, and thus, it is difficult to recognize the change portion, and it is difficult to specify an area (change area Ar1) changed from the original image in the authentication image.

Therefore, by changing the attribute of the person or the animal to obtain the authentication image, the possibility that the valid authentication processing can be performed can be increased.

As described with reference to Fig. 2 and the like, the information processing apparatus 1 may include the suitability determination unit F1 that determines whether or not each image is appropriate for generation of an authentication image.

As a result, it is possible to prevent the authentication image from being generated using the original image that is not suitable for generating the authentication image, and to realize appropriate authentication processing.

As described with reference to Fig. 2 and the like, the suitability determination unit F1 of the information processing apparatus 1 may determine the suitability by comparing the suitability score with the threshold value.

The suitability score is assigned using, for example, an AI model. As a result, the suitability of the original image can be automatically determined.

As described with reference to Fig. 2 and the like, the information processing apparatus 1 may include the storage unit 79 (authentication storage 79b) that separately stores, as an original image, an image determined to be suitable for generation of the authentication image by the suitability determination unit F1 of the information processing apparatus 1.

For example, an image captured and stored by the user is copied and stored as an original image used to generate the authentication image. As a result, even if the user performs an operation on the image file, the authentication image can be appropriately generated on the basis of the separately stored original image.

As described with reference to Figs. 2 and 6 to 9, the information processing apparatus 1 may include the unit pass/fail determination unit F5 that compares the range of the change area Ar1 with the range of the selection area Ar2 for the authentication image and determines the correctness of the selection area Ar2 for the authentication image, and the authentication processing unit F4 may determine that the authentication has succeeded in a case where the unit pass/fail determination unit F5 has obtained the pass determination a plurality of times.

As a result, the authentication processing is not completed only when the partial area and the selection area Ar2 match once. Therefore, it is possible to prevent successful authentication by the unauthorized user.

As described with reference to Figs. 7, 8, and the like, the unit pass/fail determination unit F5 of the information processing apparatus 1 may determine fail on the authentication image in a case where the selection area Ar2 does not include the change area Ar1 by a predetermined ratio or more.

For example, in a case where the selection area Ar2 is significantly smaller than the size of the changed partial area, there is a possibility that the user does not appropriately grasp the changed portion. Then, in such a case, there is a possibility that the user randomly designates the selection area Ar2. According to the present configuration, security can be improved by not passing authentication of such a user.

As described with reference to Fig. 9 and the like, the unit pass/fail determination unit F5 of the information processing apparatus 1 may determine fail on the authentication image in a case where the selection area Ar2 includes an area other than the change area Ar1 at a predetermined ratio or more.

For example, this corresponds to a case where the entire authentication image is designated as the selection area Ar2 or the like. In such designation, there is a high possibility that the user is operating without knowing where the part of the area is, and there is a high possibility that the user is an unauthorized user. Therefore, security can be improved.

As described with reference to Fig. 2, Fig. 12, and the like, the authentication processing unit F4 of the information processing apparatus 1 may determine that the authentication has succeeded in a case where pass determination by the unit pass/fail determination unit F5 is continuously obtained a predetermined number of times (threshold value m).

This can improve security.

As described above, the image processing apparatus may include the suitability determination unit F1 that determines whether or not each image is suitable as the original image of the authentication image, and the predetermined number of times (threshold value m) may be reduced as the number of images determined to be suitable as the original image by the suitability determination unit F1 increases.

As the number of images increases, the possibility that the same authentication image is used for authentication many times decreases. Therefore, since it is difficult to pattern the authentication operation, it is possible to secure the strength of security and improve the convenience of the user by reducing the predetermined number of times.

As described above, the predetermined number of times (threshold value m) provided corresponding to the continuous pass determination may be made smaller as the elapsed time from the last determination of successful authentication by the authentication processing unit F4 is shorter.

For example, in a case where only about one minute has passed since the last successful authentication, there is a high possibility that the authorized user tries to unlock the terminal. That is, it can be considered that there is a low possibility that the unauthorized user acquires the terminal and intends to unlock the terminal during the short time.

Therefore, in such a case, convenience can be improved by reducing the predetermined number of times. Further, security can be further improved by combining position information such as a global positioning system (GPS). For example, in a case where the elapsed time from the successful authentication of the previous time is short and the change in the information processing apparatus sound position information is small, it is considered that the possibility that the terminal is intercepted is low and the possibility that the terminal is attempted to be unlocked again at home or the like is high, and the predetermined number of times may be further reduced.

As described with reference to Fig. 2, Fig. 12, and the like, the authentication processing unit F4 of the information processing apparatus 1 may determine that the authentication has failed in a case where the failure determination by the unit pass/fail determination unit F5 has reached the predetermined number of times (threshold value n) .

Although there is a possibility that the authorized user cannot recognize the portion changed from the original image, in a case where the number of times is large, there is a high possibility that the user performing the operation is an unauthorized user. By failing to authenticate such a user and disabling unlocking for a certain period of time such as 10 minutes, security can be improved.

As described with reference to Figs. 10, 11, and the like, the setting processing unit F6 that sets whether or not to perform the authentication processing by the authentication processing unit F4 of the information processing apparatus 1 may be provided.

For example, on the setting screen G1, the user can set whether or not to perform authentication using the authentication image for unlocking a terminal such as a smartphone as the information processing apparatus 1. As a result, the authentication processing suitable for the request of the user can be realized.

As described with reference to Fig. 11 and the like, the setting processing unit F6 of the information processing apparatus 1 may be configured not to be able to perform setting for performing the authentication processing by the authentication processing unit F4 in a case where the number of original images is less than the predetermined number.

In a case where the number of original images is small, there is a high possibility that appropriate authentication processing cannot be performed. In such a case, by setting in advance such that the authentication method cannot be used, it is possible to prevent the use of an authentication means with low security and to encourage the increase of the original image.

As described above, the information processing apparatus 1 may be a smartphone, and the authentication processing unit F4 may perform the authentication processing based on the comparison result in releasing the lock screen of the smartphone.

The above-described various effects can be obtained in the release of the lock screen of the smartphone.

A program executed by the CPU71 to cause the information processing apparatus 1 to realize a predetermined function causes the arithmetic processing apparatus to execute: a display control function of performing display control of an authentication image having a change area Ar1 in which a partial area in an original image is changed; and an authentication processing function of performing authentication processing on the basis of a range of the change area Ar1 and a range of a selection area Ar2 selected on the authentication image displayed by the display control function. That is, various processes illustrated in Fig. 12 and the like are executed by the arithmetic processing apparatus.

Such a program can be recorded in advance in a hard disk drive (HDD) as a storage medium built in a device such as a computer apparatus, a ROM in a microcomputer having a CPU, or the like. Alternatively, the program can be temporarily or permanently stored (recorded) in a removable storage medium such as a flexible disk, a compact disk read only memory (CD-ROM), a magneto optical (MO) disk, a digital versatile disc (DVD), a Blu-ray Disc (registered trademark), a magnetic disk, a semiconductor memory, or a memory card. Such a removable storage medium can be provided as what is called package software.

Furthermore, such a program can be installed from the removable storage medium into a personal computer or the like, or can be downloaded from a download site via a network such as a local area network (LAN) or the Internet.

In the information processing method executed by the information processing apparatus 1, the arithmetic processing apparatus executes processing of performing display control of the authentication image having the change area Ar1 in which a partial area in the original image is changed, and authentication processing based on the range of the change area Ar1 and the range of the selection area Ar2 selected on the displayed authentication image.

Note that the information processing apparatus 1 such as the smartphone described above can be regarded as including: the display control unit F3 that performs control to cause the display unit 77 to display the authentication image having the change area Ar1 in which a partial area in the original image has been changed; and the authentication processing unit F4 that succeeds in authentication in a case where the image of the selection area Ar2 selected on the authentication image displayed on the display unit 77 does not match the image of the area corresponding to the selection area Ar2 in the original image.

In addition, the authentication processing unit F4 can improve the security by succeeding the authentication in a case where the image of the area corresponding to the image of the selection area Ar2 does not match with respect to the plurality of authentication images.

Here, "the images do not match" means that, for example, in the case of an RGB image, RGB values (color codes) are different for each pixel. Specifically, the predetermined area of the original image is an image area for a person with long hair, and the change area Ar1 in the authentication image obtained by changing the predetermined area of the original image is an image area for a person with short hair. In this case, the RGB values of at least some pixels are different between the image of the predetermined area of the original image and the image of the change area Ar1.

In this manner, by changing the attribute of the subject or replacing the subject itself with another subject, it is possible to create a state in which the images do not match.

Note that the effects described in the present specification are merely illustrative and are not limited, and other effects may be exerted.

Furthermore, the above-described examples may be combined in any way, and the above-described various functions and effects may be obtained even in a case where various combinations are used.

### <6. Present Technology>

Note that the present technology can also adopt the following configurations.
(1) An information processing apparatus including:
   a display control unit that performs control to display, on a display unit, an authentication image having a change area in which a partial area in an original image has been changed; and
   an authentication processing unit that performs authentication processing on the basis of a range of the change area and a range of a selection area selected on the authentication image displayed on the display unit.
(2) The information processing apparatus according to (1),
   in which the authentication processing unit performs the authentication processing using a comparison result between the range of the change area and the range of the selection area.
(3) The information processing apparatus according to any one of (1) to (2), further including
   a storage unit that stores a captured image,
   in which the original image is the captured image stored in the storage unit.
(4) The information processing apparatus according to (3), further including
   an image generation unit that generates the authentication image from the original image,
   in which the image generation unit generates the authentication image for each authentication processing.
(5) The information processing apparatus according to any one of (1) to (4),
   in which generation of the authentication image from the original image is performed using a deep fake technology.
(6) The information processing apparatus according to (5),
   in which the authentication image is obtained by changing an attribute of a person or an animal as a subject included in the original image.
(7) The information processing apparatus according to any one of (1) to (6), further including
   a suitability determination unit that determines whether or not each image is suitable for generation of the authentication image.
(8) The information processing apparatus according to (7),
   in which the suitability determination unit determines suitability by comparing a suitability score with a threshold value.
(9) The information processing apparatus according to any one of (7) to (8), further including
   a storage unit that separately stores, as the original image, an image determined to be suitable for generation of the authentication image by the suitability determination unit.
(10) The information processing apparatus according to (2), further including
   a unit pass/fail determination unit that compares the range of the change area and the range of the selection area with respect to the authentication image and determines correctness of the selection area with respect to the authentication image,
   in which the authentication processing unit determines that authentication is successful in a case where the unit pass/fail determination unit has obtained pass determination a plurality of times.
(11) The information processing apparatus according to (10),
   in which the unit pass/fail determination unit determines fail on the authentication image in a case where the selection area does not include the change area by a predetermined ratio or more.
(12) The information processing apparatus according to any one of (10) to (11),
   in which the unit pass/fail determination unit determines fail on the authentication image in a case where the selection area includes an area other than the change area by a predetermined ratio or more.
(13) The information processing apparatus according to any one of (10) to (12),
   in which the authentication processing unit determines that the authentication has succeeded in a case where the unit pass/fail determination unit has continuously obtained pass determination a predetermined number of times.
(14) The information processing apparatus according to (13), further including
   a suitability determination unit that determines whether or not each image is suitable as an original image of the authentication image,
   in which the predetermined number of times is made smaller as the number of images determined to be suitable as the original image by the suitability determination unit is larger.
(15) The information processing apparatus according to any one of (13) to (14),
   in which the predetermined number of times is made smaller as an elapsed time from last determination of successful authentication by the authentication processing unit is shorter.
(16) The information processing apparatus according to any one of (10) to (15),
   in which the authentication processing unit determines that authentication has failed in a case where the number of times of fail determination by the unit pass/fail determination unit reaches a predetermined number of times.
(17) The information processing apparatus according to any one of (1) to (16), further including
   a setting processing unit that sets whether or not to perform the authentication processing by the authentication processing unit.
(18) The information processing apparatus according to (17),
   in which the setting processing unit is configured not to set that the authentication processing is performed by the authentication processing unit in a case where the number of original images is less than a predetermined number.
(19) The information processing apparatus according to any one of (1) to (17),
   in which the authentication processing unit performs the authentication processing when a lock screen of a smartphone is released.
(20) A program causing an arithmetic processing apparatus to execute:
   a display control function of performing display control of an authentication image having a change area in which a partial area in an original image has been changed; and
   an authentication processing function that performs an authentication processing on the basis of a range of the change area and a range of a selection area selected on the authentication image displayed by the display control function.
(21) An information processing method in which an arithmetic processing apparatus executes:
   processing of performing display control of an authentication image having a change area in which a partial area in an original image has been changed; and
   authentication processing based on a range of the change area and a range of a selection area selected on the authentication image displayed.
(22) An information processing apparatus including:
   a display control unit that performs control to display, on a display unit, an authentication image having a change area in which a partial area in an original image has been changed; and
   an authentication processing unit that succeeds authentication in a case where an image of a selection area selected on the authentication image displayed on the display unit does not match an image of an area corresponding to the selection area in the original image.
(23) The information processing apparatus according to (22),
   in which generation of the authentication image from the original image is performed using a deep fake technology.
(24) The information processing apparatus according to any one of (22) to (23),
   in which the authentication processing unit succeeds the authentication in a case where an image of the selection area and an image of the area corresponding do not match for a plurality of the authentication images.
(25) The information processing apparatus according to any one of (22) to (24),
   in which the authentication processing unit performs determination processing as to whether or not the authentication is to be successful in releasing a lock screen of a smartphone.

### REFERENCE SIGNS LIST

- 1: Information processing apparatus
- 79: Storage unit
- 79a: Image storage
- 79b: Authentication storage
- F1: Suitability determination unit
- F2: Image generation unit
- F3: Display control unit
- F4: Authentication processing unit
- F5: Unit pass/fail determination unit
- F6: Setting processing unit
- Ar1: Change area
- Ar2: Selection area

## Claims

1. An information processing apparatus comprising:
a display control unit that performs control to display, on a display unit, an authentication image having a change area in which a partial area in an original image has been changed; and
an authentication processing unit that performs authentication processing on a basis of a range of the change area and a range of a selection area selected on the authentication image displayed on the display unit.

2. The information processing apparatus according to claim 1,
wherein the authentication processing unit performs the authentication processing using a comparison result between the range of the change area and the range of the selection area.

3. The information processing apparatus according to claim 1, further comprising
a storage unit that stores a captured image,
wherein the original image is the captured image stored in the storage unit.

4. The information processing apparatus according to claim 3, further comprising
an image generation unit that generates the authentication image from the original image,
wherein the image generation unit generates the authentication image for each authentication processing.

5. The information processing apparatus according to claim 1,
wherein generation of the authentication image from the original image is performed using a deep fake technology.

6. The information processing apparatus according to claim 5,
wherein the authentication image is obtained by changing an attribute of a person or an animal as a subject included in the original image.

7. The information processing apparatus according to claim 1, further comprising
a suitability determination unit that determines whether or not each image is suitable for generation of the authentication image.

8. The information processing apparatus according to claim 7,
wherein the suitability determination unit determines suitability by comparing a suitability score with a threshold value.

9. The information processing apparatus according to claim 7, further comprising
a storage unit that separately stores, as the original image, an image determined to be suitable for generation of the authentication image by the suitability determination unit.

10. The information processing apparatus according to claim 2, further comprising
a unit pass/fail determination unit that compares the range of the change area and the range of the selection area with respect to the authentication image and determines correctness of the selection area with respect to the authentication image,
wherein the authentication processing unit determines that authentication is successful in a case where the unit pass/fail determination unit has obtained pass determination a plurality of times.

11. The information processing apparatus according to claim 10,
wherein the unit pass/fail determination unit determines fail on the authentication image in a case where the selection area does not include the change area by a predetermined ratio or more.

12. The information processing apparatus according to claim 10,
wherein the unit pass/fail determination unit determines fail on the authentication image in a case where the selection area includes an area other than the change area by a predetermined ratio or more.

13. The information processing apparatus according to claim 10,
wherein the authentication processing unit determines that the authentication has succeeded in a case where the unit pass/fail determination unit has continuously obtained pass determination a predetermined number of times.

14. The information processing apparatus according to claim 13, further comprising
a suitability determination unit that determines whether or not each image is suitable as an original image of the authentication image,
wherein the predetermined number of times is made smaller as the number of images determined to be suitable as the original image by the suitability determination unit is larger.

15. The information processing apparatus according to claim 13,
wherein the predetermined number of times is made smaller as an elapsed time from last determination of successful authentication by the authentication processing unit is shorter.

16. The information processing apparatus according to claim 10,
wherein the authentication processing unit determines that authentication has failed in a case where the number of times of fail determination by the unit pass/fail determination unit reaches a predetermined number of times.

17. The information processing apparatus according to claim 1, further comprising
a setting processing unit that sets whether or not to perform the authentication processing by the authentication processing unit.

18. The information processing apparatus according to claim 17,
wherein the setting processing unit is configured not to set that the authentication processing is performed by the authentication processing unit in a case where the number of original images is less than a predetermined number.

19. The information processing apparatus according to claim 1,
wherein the authentication processing unit performs the authentication processing when a lock screen of a smartphone is released.

20. A program causing an arithmetic processing apparatus to execute:
a display control function of performing display control of an authentication image having a change area in which a partial area in an original image has been changed; and
an authentication processing function that performs an authentication processing on a basis of a range of the change area and a range of a selection area selected on the authentication image displayed by the display control function.

21. An information processing method in which an arithmetic processing apparatus executes:
processing of performing display control of an authentication image having a change area in which a partial area in an original image has been changed; and
authentication processing based on a range of the change area and a range of a selection area selected on the authentication image displayed.

22. An information processing apparatus comprising:
a display control unit that performs control to display, on a display unit, an authentication image having a change area in which a partial area in an original image has been changed; and
an authentication processing unit that succeeds authentication in a case where an image of a selection area selected on the authentication image displayed on the display unit does not match an image of an area corresponding to the selection area in the original image.

23. The information processing apparatus according to claim 22,
wherein generation of the authentication image from the original image is performed using a deep fake technology.

24. The information processing apparatus according to claim 22,
wherein the authentication processing unit succeeds the authentication in a case where an image of the selection area and an image of the area corresponding do not match for a plurality of the authentication images.

25. The information processing apparatus according to claim 22,
wherein the authentication processing unit performs determination processing as to whether or not the authentication is to be successful in releasing a lock screen of a smartphone.
